# EUROPEAN PATENT SPECIFICATION

(11) **EP 3 211 515 B1**
(45) Date of publication and mention of the grant of the patent: **08.12.2021**
(21) Application number: 15852091.6
(22) Date of filing: 19.10.2015
(51) Int. Cl.: G06F 3/0481, G06F 3/0486, G06F 3/0488

(54) **DISPLAY DEVICE AND METHOD FOR CONTROLLING DISPLAY DEVICE**
ANZEIGEVORRICHTUNG UND VERFAHREN ZUR STEUERUNG DER ANZEIGEVORRICHTUNG
DISPOSITIF D'AFFICHAGE ET PROCÉDÉ DE COMMANDE D'UN DISPOSITIF D'AFFICHAGE

(30) Priority: 21.10.2014 CN 201410561962; 07.10.2015 KR 20150141038
(43) Date of publication of application: 30.08.2017
(73) Proprietor: Samsung Electronics Co., Ltd., Gyeonggi-do 16677 (KR)
(72) Inventor: LI, Zhanzhan, Beijing 100000 (CN)
(74) Representative: HGF
(86) International application number: PCT/KR2015/011052
(87) International publication number: WO 2016/064157

(56) References cited:
- EP-A2- 2 674 834
- EP-A2- 2 741 192
- KR-A- 20120 092 037
- KR-A- 20130 127 050
- KR-B1- 101 085 474
- US-A1- 2013 285 948
- US-A1- 2013 300 697
- US-A1- 2014 181 746
- None

## Description

### TECHNICAL FIELD

The present disclosure relates to a display device and a method of controlling the display device.

### BACKGROUND ART

According to diversification of types of display devices, various display devices have been commercialized for domestic use, portable use, and business use. Also, multitasking functions are widely used as performance of the display device is increased and the screen of the display device is enlarged. Accordingly, the screen may be divided into multiple display regions for efficient use of the display device, and various functions may simultaneously be performed on the multiple screens.
US2013/300697 A1 concerns a portable terminal having a bended display divided into a main region of a front surface and a sub-region of a side of the portable terminal and operating functions of the portable terminal in connection with the main region and the sub-region, and a method of operating the same. The method of operating functions of a portable terminal having a bended display, includes receiving an input of an event, determining a type of the input event, outputting event information, according to an internal event input based on the bended display, through at least one of a main region and a sub-region of the bended display when the input event is the internal event, and outputting event information, according to an external event input from an outside source, through the sub-region of the bended display when the input event is the external event. EP2674834 discloses a method for controlling a display device, whereby a sub-display region can be used via drag-and-drop as a clipboard.

### DETAILED DESCRIPTION OF THE INVENTION

### TECHNICAL PROBLEM

Provided embodiments are a display device including a plurality of display regions, and a method of controlling the display device.

### TECHNICAL SOLUTION

According to an aspect of an embodiment, a method of controlling a display device, the method includes: receiving a selection input of a user selecting an object included in a main display region; receiving a motion input of the user moving the object to a sub-display region; obtaining shortcut information of the object; and displaying at least one of a plurality of icons in the sub-display region, wherein an icon included among the displayed at least one of the plurality of icons indicates the shortcut information.

### DESCRIPTION OF THE DRAWINGS

FIG. 1 is a block diagram of a display device according to an embodiment.
FIG. 2A is a simple diagram of a structure of a display device, according to an embodiment.
FIG. 2B is a simple flowchart of a method of controlling a display device, according to an embodiment.
FIG. 3 is a detailed diagram of a structure of a display device, according to an embodiment.
FIG. 4 is a flowchart of a method of controlling a display device, according to an embodiment.
FIG. 5A is a diagram illustrating an example of a sub-display region extending from a main display region.
FIG. 5B is a diagram illustrating an example of a sub-display region separate from a main display region.
FIG. 6A is a diagram illustrating an example where an object is included in a display device.
FIG. 6B is a diagram illustrating an example of a method of adding an object displayed in a main display region to a sub-display region.
FIG. 7A is a diagram illustrating an example where an object is external data that is not included in a display device.
FIG. 7B is a diagram illustrating an example of a method of adding an object displayed in a main display region to a sub-display region.
FIG. 8 is a diagram illustrating an example of a method of using a group icon.
FIG. 9 is a diagram illustrating an example of a method of editing a sub-display region.
FIG. 10 is a diagram illustrating an example of a method of generating a document by using icons included in a sub-display region.
FIG. 11 is a diagram illustrating an example of a method of editing a social network service (SNS) by using a sub-display region.
FIG. 12 is a diagram illustrating an example of a display device including a plurality of sub-display regions.

### BEST MODE

According to an aspect of an embodiment, a method of controlling a display device, the method includes: receiving a selection input of a user selecting an object included in a main display region; receiving a motion input of the user moving the object to a sub-display region; obtaining shortcut information of the object; and displaying at least one of a plurality of icons in the sub-display region, wherein an icon included among the displayed at least one of the plurality of icons indicates the shortcut information.

The sub-display region may extend from or be separate from the main display region.

The object may be one of an application, a contacts list, a folder, a text file, an image file, an audio file, and a video file which are included in the display device, and the shortcut information may indicate a location where the object is stored.

The method may further include: receiving a selection input of the user selecting the icon; and downloading the object to the display device.

The method may further include: receiving a selection input of the user with respect to the icon; and displaying the object in the main display region.

The object may be one of a webpage, text, an image, and video data received by the display device from an external source, and the receiving of the motion input may include downloading the object to the display device.

The object may be one of a webpage, text, an image, and video data received by the display device from an external source, and the shortcut information may include a network address of the object.

The displaying may include: generating a group including at least one of the plurality of icons; and displaying a group icon corresponding to the group in the sub-display region.

The method may further include: receiving a motion input of the user with respect to the sub-display region; determining a response according to the motion input; and displaying a result according to the response.

The motion input of the user with respect to the sub-display region may include at least one of a drag gesture, a touch gesture, a double touch gesture, a multi-touch gesture, a long-touch gesture, and a slide gesture, and the determining of the response may include editing the sub-display region.

The receiving of the motion input of the user with respect to the sub-display region may include receiving a selection input selecting at least one of the plurality of icons included in the sub-display region, and the displaying of the result according to the response may include displaying a document comprising at least a portion of an object corresponding to each of the at least one icon in the main display region.

According to an aspect of another embodiment, a display device includes: a display including a main display region and at least one sub-display region; a user input interface configured to receive a selection input of a user selecting an object included in the main display region, and receive a motion input of the user moving the object to the at least one sub-display region; and a controller configured to obtain shortcut information of the object and generate an icon representing the shortcut information, wherein the display is configured to display the icon in the at least one sub-display region.

The at least one sub-display region may be extended or separate from the main display region.

The display device may further include a storage unit, wherein the object may be one of an application, a contacts list, a folder, a text file, an image file, an audio file, and a video file, which are stored in the storage unit, and the shortcut information may indicate a location where the object is stored.

The display device may further include a communicator configured to receive external data including at least one of a webpage, text, an image, and video data, and the object may be included in the external data.

The communication unit may be further configured to download the object to the display device.

The shortcut information may indicate a network address of the object.

The user input interface may be configured to receive a selection input of the user selecting the icon, and the communicator may be further configured to download the object to the display device.

The user input unit may be configured to receive a selection input of the user with respect to the icon, and the display may be further configured to display the object in the main display region.

The controller may be configured to generate a group including at least one icon and generate a group icon corresponding to the group, and the display may be further configured to display the group icon in the sub-display region.

The user input unit may be further configured to receive a motion input of the user with respect to the at least one sub-display region, the controller may be further configured to determine a response according to the motion input, and the display may be further configured to display a result according to the response.

The motion input of the user with respect to the at least one sub-display region may include at least one of a drag gesture, a touch gesture, a double touch gesture, a multi-touch gesture, a long-touch gesture, and a slide gesture, and the controller may be further configured to edit the sub-display region.

The user input unit may be further configured to receive a selection input with respect to at least one icon included in the at least one sub-display region, and the display unit may be further configured to display a document including at least some of an object corresponding to each of the at least one icon in the main display region.

According to an aspect of another embodiment, a computer-readable recording medium has recorded thereon a program which, when executed by a computer, performs the method.

### MODE OF THE INVENTION

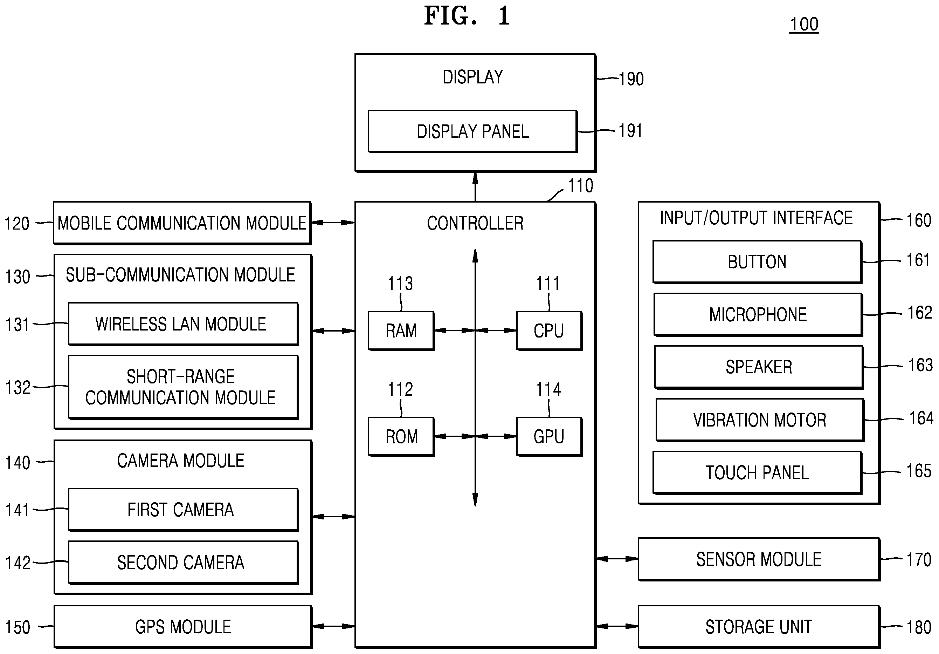

FIG. 1 is a block diagram of a display device according to an embodiment. The display device of FIG. 1 is only an example, and may include more or less components than those shown in FIG. 1.

Referring to FIG. 1, a display device 100 includes a controller 110, a mobile communication module 120, a sub-communication module 130, a camera module 140, a global positioning system (GPS) module 150, an input/output module 160, a sensor module 170, a storage unit 180, and a display 190. The sub-communication module 130 may include at least one of a wireless local area network (LAN) module 131 and a short-range communication module 132, the camera module 140 may include at least one of a first camera 141 and a second camera 142, and the input/output module 160 may include at least one of a button 161, a microphone 162, a speaker 163, a vibration motor 164, and a touch panel 165.

The controller 110 may include a central processing unit (CPU) 111, a read-only memory (ROM) 112 storing a control program for controlling the display device 100, a random access memory (RAM) 113 storing a signal or data input from an external source of the display device 100 or used as a storage region for operations performed by the display device 100, and a graphical processing unit (GPU) 114 for processing graphics of the display device 100. The CPU 111 may include a single core or multicore processor, such as a dual core, a triple core, or a quad core processor. The CPU 111, the ROM 112, the RAM 113, and the GPU 114 may be connected to each other through an internal bus.

The controller 110 may control the mobile communication module 120, the sub-communication module 130, the camera module 140, the GPU module 150, the input/output module 160, the sensor module 170, the storage unit 180, and the display 190.

The mobile communication module 120 may connect the display device 100 to an external device through mobile communication by using at least one (one or more) antenna (not shown) according to control by the controller 110. The mobile communication module 120 may transmit/receive a wireless signal to and from a mobile phone (not shown) having a phone number input to the display device 100, a smart phone (not shown), a tablet PC (not shown), or another device (not shown) so as to establish a voice call or a video call or transmit/receive a short message service (SMS) communication or a multimedia service (MMS) communication.

The sub-communication module 130 may include at least one of the wireless LAN module 131 and the short-range communication module 132. For example, the sub-communication module 130 may include only the wireless LAN module 131, only the short-range communication module 132, or both the wireless LAN module 131 and the short-range communication module 132.

The wireless LAN module 131 may connect to the Internet at a place where a wireless access point (AP) (not shown) is installed, according to control of the controller 110. The wireless LAN module 131 may support the IEEE802.11x standard. The short-range communication module 132 may perform short-range communication wirelessly between the display device 100 and an image forming apparatus (not shown), according to control of the controller 110. The short-range communication may include Bluetooth, infrared data association (IrDA), and Zigbee.

The display device 100 may include at least one of the mobile communication module 120, the wireless LAN module 131, and the short-range communication module 132 according to performance.

The camera module 140 may include at least one of the first camera 141 and the second camera 142, which capture a still image or a moving image, according to control of the controller 110. Also, the first or second camera 141 or 142 may include an auxiliary light source (not shown) providing a light amount required for capturing an image. The first camera 141 may be provided at a front surface of the display device 100, and the second camera 142 may be provided at a rear surface of the display device 100. Alternatively, the first and second cameras 141 and 142 may be adjacently disposed (for example, a gap therebetween is between 1 cm and 8 cm) so as to capture a 3D still image or a 3D moving image.

The GPS module 150 may receive electric waves from a plurality of GPS satellites (not shown) in orbit around the Earth, and calculate a location of the display device 100 by using an arrival time from the GPS satellite to the display device 100.

The input/output interface 160 may include at least one of the plurality of buttons 161, the microphone 162, the speaker 163, the vibration motor 164, and the touch panel 165.

The button 161 may be provided on a front surface, a side surface, or a rear surface of a housing of the display device 100, and may include at least one of a power/lock button (not shown), a volume button (not shown), a menu button, a home button, a back button, and a search button.

The microphone 162 may generate an electric signal upon receiving a voice or sound input, according to control of the controller 110.

The speaker 163 may output sound corresponding to various signals of the mobile communication module 120, the sub-communication module 130, the camera module 140, or the GPS module 150 to the outside of the display device 100, according to control of the controller 110. The speaker 163 may output sound corresponding to a function performed by the display device 100. One or more speakers 163 may be provided at suitable location(s) on the housing of the display device 100.

The vibration motor 164 may convert an electric signal to mechanical vibration according to control of the controller 110. For example, when the display device 100 in a vibration mode receives a voice call from another device (not shown), the vibration motor 164 may be operated. The vibration motor 164 may be operated in response to a touch gesture of the user touching the touch panel 165 or a continuous touch input on the touch panel 165.

The touch panel 165 may transmit an analog signal corresponding to at least one touch input entered via a user interface (Ul) to the controller 110. The touch panel 165 may receive at least one touch input through a body part (for example, a finger) of the user or a physical input device (for example, a stylus pen). Also, the touch panel 165 may receive at least one continuous touch input. The touch panel 165 may transmit an analog signal corresponding to the continuous touch input to the controller 110.

A touch input is not limited to an input made through contact between the touch panel 165 and the body part of the user or the physical input device, and may include a non-contact input (for example, when the distance between the touch panel 165 and the body part is less than or equal to 1 mm). A detection distance of the touch panel 165 may vary according to performance or structure of the display device 100.

The touch panel 165 may be realized by using, for example, a resistive method, a capacitive method, an infrared method, or an ultrasound wave method. The touch panel 165 may transmit a digital signal converted from a received analog signal (for example, an X- or Y-coordinate) to the controller 110. The controller 110 may control the touch panel 165 by using the digital signal received from the touch panel 165. For example, the controller 110 may select an application execution icon (not shown) or execute an application displayed on the touch panel 165, in response to a touch input.

The sensor module 170 includes at least one sensor detecting a state of the display device 100. For example, the sensor module 170 may include a proximity sensor detecting proximity of the user to the display device 100, an illumination sensor (not shown) detecting the amount of light around the display device 100, or a motion sensor (not shown) detecting movement of the display device 100 (for example, rotation of the display device 100, or acceleration or vibration due to a force applied to the display device 100). A sensor of the sensor module 170 may be added or removed according to performance of the display device 100.

The storage unit 180 may store a signal or data input/output according to operations of the mobile communication module 120, the sub-communication module 130, the camera module 140, the GPS module 150, the input/output module 160, the sensor module 170, and the display 190, according to control of the controller 110. The storage unit 180 may store control programs and applications for controlling of the display device 100 or controller 110.

A "storage unit" may include the storage unit 180, the ROM 112 or RAM 130 in the controller 110, or a memory card (not shown) installed in the display device 100. The storage unit may include a non-volatile memory, a volatile memory, a hard disk drive (HDD), or a solid state drive (SSD).

The display 190 displays information processed by the display device 100 on a display panel 191. For example, the display 190 may display a UI for selecting a virtual image, a UI for setting an operation of the virtual image, and a UI for purchasing an item of the virtual image.

Meanwhile, when the display panel 191 and the touch panel 165 form a layer structure to be configured as a touch screen, the display 190 may be used not only as an output device, but also as an input device. The display panel 191 of the display 190 may include at least one of a liquid crystal display, a thin-film transistor-liquid crystal display, an organic light-emitting diode, a flexible display, a 3D display, and an electrophoretic display. Also, the display device 100 may include two or more displays 190 according to an embodiment of the display device 100. In this case, the two or more displays 190 may be connected to each other by using a hinge, and the angle of the hinge may be adjusted such that the two or more displays 190 face each other.

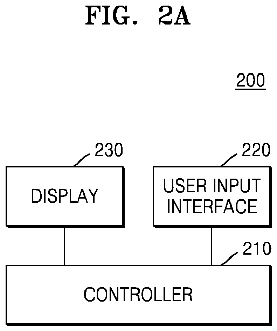

FIG. 2A is a simple diagram of a structure of a display device, according to an embodiment. A display device 200 includes a controller 210, a user input interface 220, and a display 230. The display device 200 may correspond to the display device 100 of FIG. 1. The controller 210 may correspond to the controller 110 of FIG. 1. The user input interface 220 may correspond to the button 161 and the touch panel 165 of FIG. 1. The display 230 may correspond to the display 190 of FIG. 1.

The display 230 may include a main display region and at least one sub-display region. According to an embodiment, the sub-display region may be extended from the main display region. According to another embodiment, the sub-display region may be separate from the main display region.

The user input interface 220 receives a selection input of a user with respect to an object included in the main display region. The selection input of the user may include an input selecting the object and an input moving the selected object to the sub-display region.

The controller 210 controls the user input interface 220 and the display 230. Also, the controller 210 obtains shortcut information of the object corresponding to the selection input received through the user input interface 220. The controller 210 generates an icon representing the shortcut information of the selected object. The display 230 displays the icon in the sub-display region.

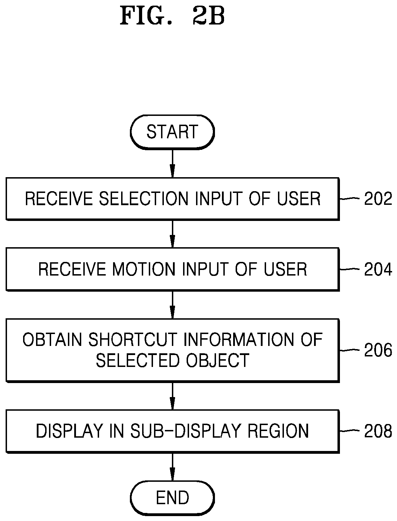

FIG. 2B is a simple flowchart of a method of controlling a display device, according to an embodiment. In operation 202, the display device 200 receives a selection input of a user with respect to an object included in a main display region.

In operation 204, the display device 200 receives a motion input of the user moving the object included in the main display region to a sub-display region. According to an embodiment, the motion input of the user may include a drag gesture input dragging the object included in the main display region to the sub-display region.

In operation 206, the display device 200 obtains shortcut information of the object. According to an embodiment, the shortcut information may indicate a location where the selected object is stored. According to another embodiment, when the selected object is external data, the shortcut information may indicate a network address of the selected object.

In operation 208, the display device 200 displays an icon representing the shortcut information in the sub-display region. The icon may have a pre-set shape which varies corresponding to the type of object.

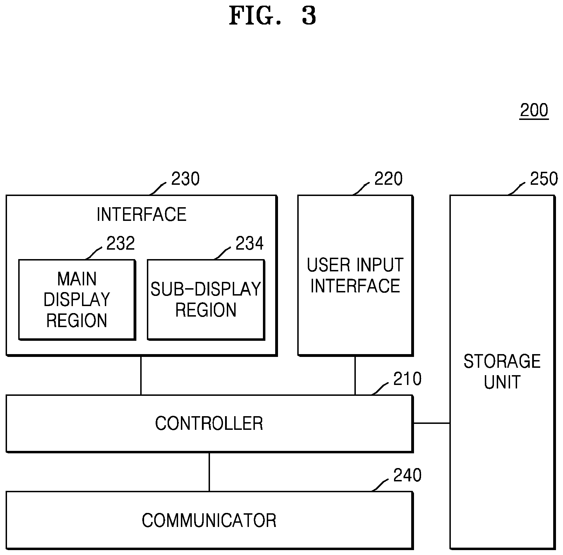

FIG. 3 is a detailed diagram of a structure of a display device, according to an embodiment. The display device 200 includes the controller 210, the user input interface 220, the display 230, a communicator 240, and a storage unit 250.

The display device 200 may correspond to the display device 100 of FIG. 1. The controller 210 may correspond to the controller 110 of FIG. 1. The user input interface 220 may correspond to the button 161 and the touch panel 165 of FIG. 1. The display 230 may correspond to the display 190 of FIG. 1. The communicator 240 may correspond to the mobile communication module 120 and the sub-communication module 130 of FIG. 1. The storage unit 250 may correspond to the storage unit 180 of FIG. 1.

The display 230 may include a main display region 232 and a sub-display region 234. According to an embodiment, the sub-display region 234 may be extended from the main display region 232. According to another embodiment, the sub-display region 234 may be separate from the main display region 232.

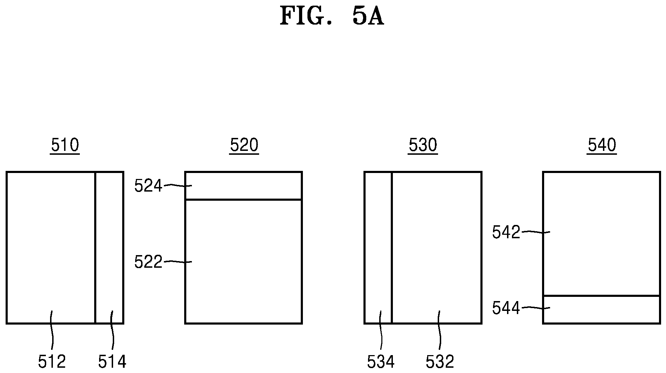

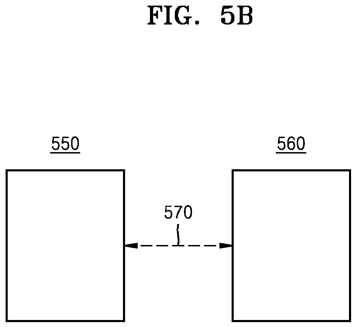

Referring to FIGS. 5A and 5B, display devices 510 through 560 may correspond to the display device 200 of FIG. 3. The display devices 510 through 540 of FIG. 5A each include main display regions 512 through 544 and sub-display regions 514 through 544 respectively extending therefrom.

Referring to FIG. 5A, the sub-display regions 514, 524, 534, and 544 may respectively extend from sides of the main display regions 512, 522, 532, and 542, but are not limited thereto. According to an embodiment, the main display regions 512, 522, 532, and 542 may be flat panel display screens, and the sub-display regions 514 524, 534, and 544 may be curved display screens.

Referring to FIG. 5B, a sub-display region 560 may be separate from a main display region 550. The sub-display region 560 may be connected to the main display region 550, as indicated by reference numeral 570, either wirelessly or via wires.

The user input interface 220 receives a selection input of a user with respect to an object included in the main display region 232. The user input interface 220 may be at least one of a touch panel, a keyboard, and a mouse. According to an embodiment, the display 230 and the user input interface 220 may be configured as a single touch screen.

The selection input of the user may include an input of selecting the object included in the main display region 232. According to an embodiment, the input of selecting the object may include a touch input. The touch input may include a touch, a double touch, and a long-touch.

The selection input of the user may include an input moving the selected object to the sub-display region 234. For example, the user may instruct the display device 200 to move the selected object to the sub-display region 234 by inputting a drag gesture dragging the selected object from the main display region 232 to the sub-display region 234. According to another embodiment, the user may touch a button moving the selected object to the sub-display region 234.

The communication unit 240 may receive external data. The external data may be data that is not included in the display device. For example, the external data may include at least one of a webpage, text, an image, and video data. According to an embodiment, the object may be a piece of external data.

The communicator 240 may download external data corresponding to the selected object to the display device 200. Also, the communicator 240 may obtain a network address corresponding to the selected object.

According to an embodiment, the user may instruct the selected object to move to the sub-display region 234 through an input of dragging the object corresponding to the external data from the main display region 232 to the sub-display region 234. In this case, the communicator 240 may download the external data corresponding to the selected object to the display device 200. According to another embodiment, the communicator 240 may obtain the network address of the selected object.

The storage unit 250 may include a volatile recording medium and a non-volatile recording medium storing data of the display device 200. An application, a folder, a text file, an image file, an audio file, and a video file of the display device 200 may be stored in the storage unit 250. Also, the external data downloaded by the communicator 240 may be stored in the storage unit 250.

The controller 210 may control the user input interface 220, the display 230, the communicator 240, and the storage unit 250. Also, the controller 210 may obtain shortcut information of the object corresponding to the selection input received through the user input interface 220. Also, the controller 210 may obtain shortcut information of the external data downloaded by the communicator 240.

According to an embodiment, the shortcut information may indicate a location where data corresponding to the selected object is stored. According to another embodiment, when the selected object is external data, the shortcut information may indicate the network address of the selected object.

The controller 210 may generate an icon representing the shortcut information of the selected object. The display 230 may display the icon in the sub-display region 234.

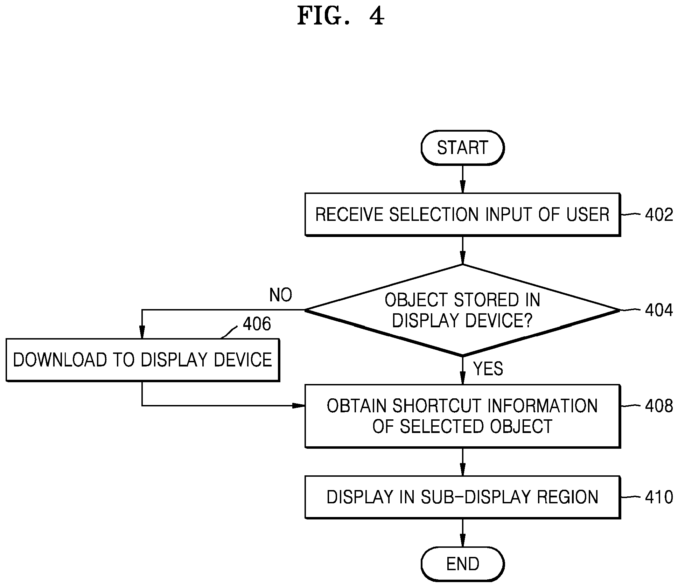

FIG. 4 is a flowchart of a method of controlling a display device, according to an embodiment. In operation 402, the display device 200 may receive a selection input of a user with respect to an object included in a main display region.

The selection input of the user may include an input of selecting the object included in the main display region. According to an embodiment, the input of selecting the object may include a touch input. The touch input may include a touch, a double touch, and a long-touch.

The selection input of the user may include an input moving the selected object to a sub-display region. For example, the user may instruct the selected object to move to the sub-display region through an input of dragging the selected object from the main display region to the sub-display region. According to another embodiment, the user may touch a button moving the selected object to the sub-display region.

In operation 404, the display device 200 may determine whether the object selected from the main display region by the user is an object stored in the display device 200. An object stored in the display device 200 may be an application, a folder, a text file, an image file, an audio file, or a video file, but is not limited thereto.

An object that is not stored in the display device 200 may be a webpage, text, an image, or video data received by the display device 200 from an external source, but is not limited thereto. When the object is not stored in the display device 200, the display device 200 may perform operation 406.

In operation 406, the display device 200 may download external data corresponding to the selected object to the display device 200. According to another embodiment, the display device 200 may download a network address of the selected object.

In operation 408, the display device 200 may obtain shortcut information of the selected object. When the selected object is stored in the display device 200, the shortcut information may indicate a location of the selected object in the display device 200. When the selected object is not stored in the display device 200, the shortcut information may be a network address of the selected object.

In operation 410, the display device 200 may generate an icon corresponding to the shortcut information of the selected object. The icon may have a pre-set shape which varies corresponding to the type of object. The icon may include a name of the object. Also, the icon may be in a form including content of the object.

The display device 200 may display the icon in the sub-display region. According to an embodiment, the display device 200 may generate a group including one or more icons. The display device 200 may generate a group icon corresponding to the group. The display device 200 may display the group icon in the sub-display region.

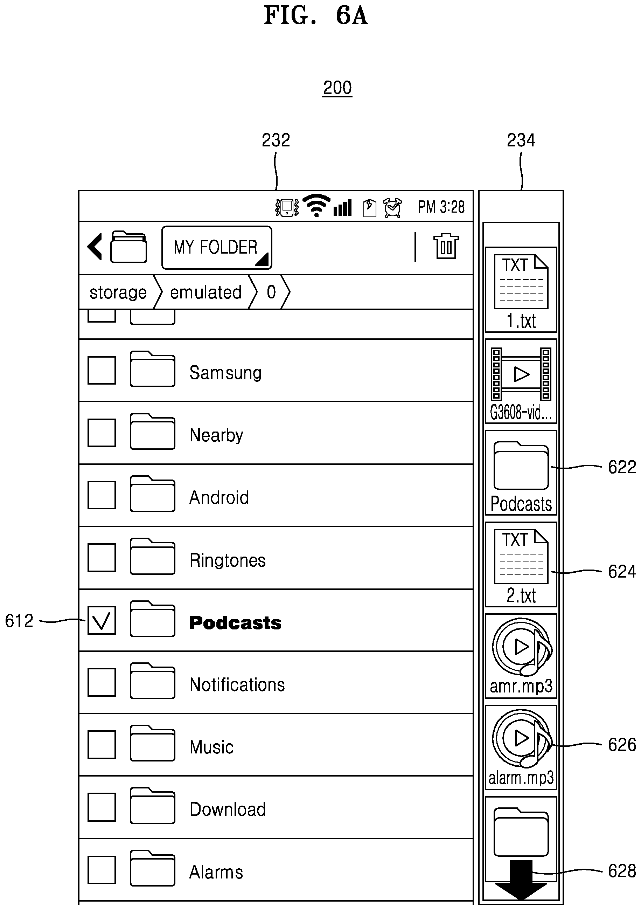

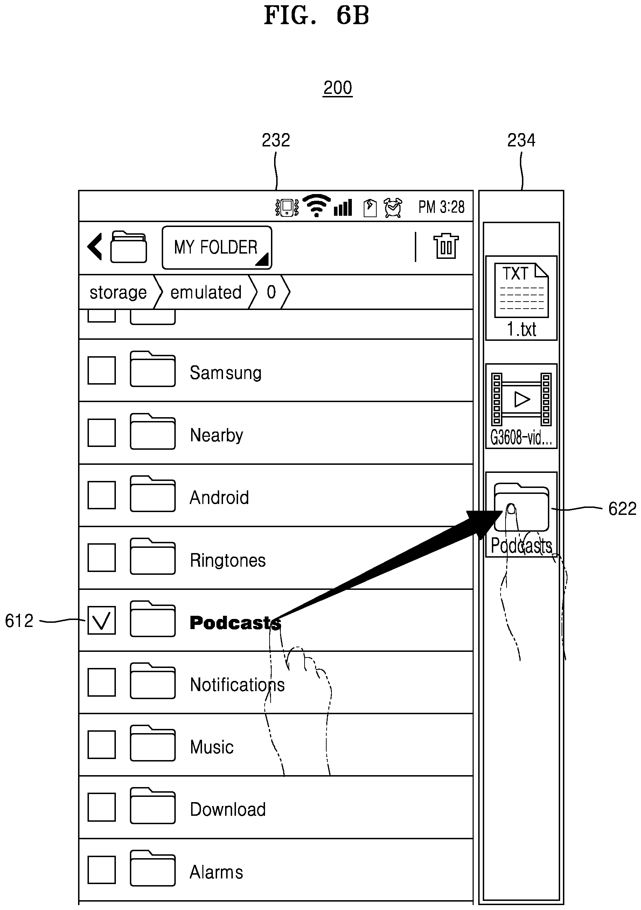

FIGS. 6A and 6B are diagrams illustrating an example where an object is included in the display device. Referring to FIG. 6A, the display device 200 includes the main display region 232 and the sub-display region 234.

According to an embodiment, the main display region 232 may include a file explorer application. The main display region 232 may include one or more objects. In FIG. 6A, objects included in the main display region 232 are folders. According to another embodiment. The objects may correspond to an application, a contacts list, a folder, a text file, an image file, an audio file, or a video file, which are stored in the display device 200, but are not limited thereto.

Referring to FIG. 6A, the sub-display region 234 may include one or more icons. According to an embodiment, each icon may have a pre-set shape which varies corresponding to the type of object. The icon may include a name of the object. Also, the icon may have a shape including content of the object.

If any icons are unable to be displayed in the sub-display region 234, a user may view non-displayed icons by scrolling the sub-display region 234 up and down. The sub-display region 234 may include a scroll display 628 for scrolling the sub-display region 234 up and down.

In FIG. 6A, the main display region 232 displays a "Podcasts" folder 612. Also, the sub-display region 234 displays an icon 622 representing shortcut information of the "Podcasts" folder 612. According to an embodiment, when the user selects the icon 622, content of the "Podcasts" folder 612 may be displayed in the main display region 232.

The sub-display region 234 may display an icon 624 representing shortcut information of a text file "2.txt", and an icon 626 representing shortcut information of an audio file "alarm.mp3". When the user selects the icon 624, content of the "2.txt" file may be displayed in the main display region 232. When the user selects the icon 626, the "alarm.mp3" file may be played.

According to an embodiment, the object may be contacts list information stored in the display device 200. In this case, an icon representing the contacts list information may be displayed in the sub-display region 234. When the user selects the icon representing the contacts list information, the display device 200 may create a contact according to the contacts list information.

For example, the display device 200 may make a call to a contact corresponding to the icon selected by the user. According to another embodiment, the display device 200 may display a text message preparation window for transmitting a text message to the contact corresponding to the icon selected by the user.

FIG. 6B is a diagram illustrating an example of a method of adding an object displayed in the main display region 232 to the sub-display region 234. According to an embodiment, the user may select the "Podcasts" folder 612 included in the main display region 232. For example, the user may perform an operation of long-touching the "Podcasts" folder 612. According to another embodiment, the user may set a file explorer to a selection mode and touch the "Podcasts" folder 612.

The user may drag the "Podcasts" folder 612 from the main display region 232 to the sub-display region 234. The sub-display region 234 may display the icon 622 representing the shortcut information of the "Podcasts" folder 612.

The display device 200 may display the icon 622 at a location in the sub-display region 234 where the user ends the drag gesture. When another icon is already located at the location where the user ends the drag gesture, the display device 200 may slide or move the other icon up or down. According to another embodiment, the icon 622 may be displayed at the bottom of icons included in the sub-display region 234.

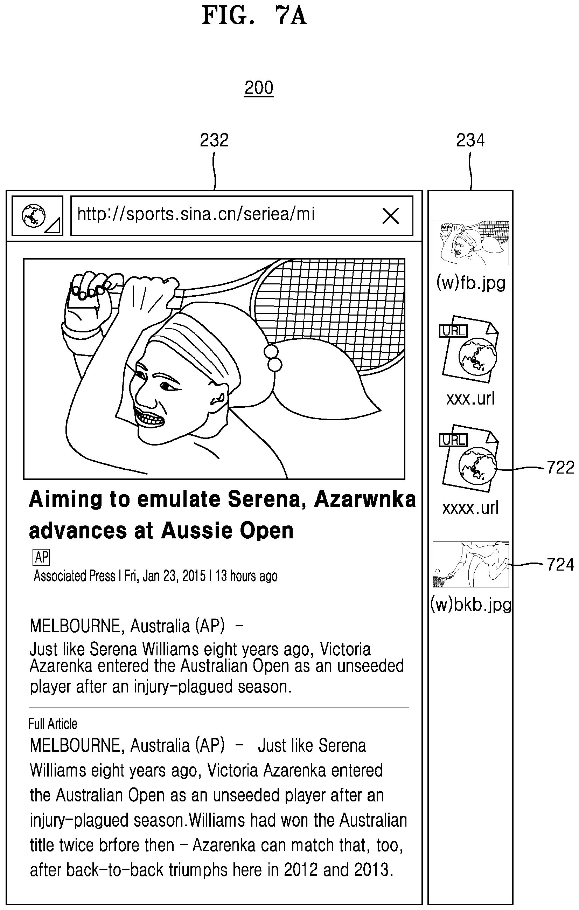

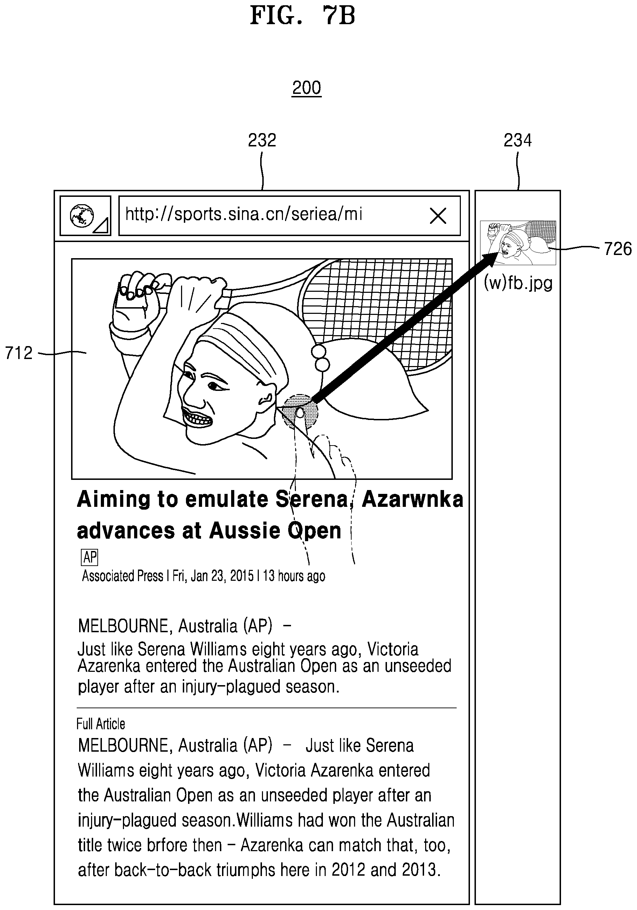

FIGS. 7A and 7B are diagrams illustrating an example where an object is external data that is not included in a display device. Referring to FIG. 7A, the display device 200 includes the main display region 232 and the sub-display region 234.

In FIG. 7A, the main display region 232 displays a webpage. In this case, the object may be the webpage, or an image, text, or video data included in the webpage.

The sub-display region 234 may include an icon representing shortcut information of the object. For example, the sub-display region 234 may include an icon 722 representing shortcut information of the webpage, and an icon 724 representing shortcut information of the image included in the webpage.

According to an embodiment, shortcut information of external data may indicate a network address of an object. According to another embodiment, shortcut information of external data may indicate a downloaded location of the external data in the display device 200.

When the user selects the icon 722, the webpage may be displayed in the main display region 232. When the user selects the icon 724, the display device 200 may display an image file corresponding to the icon 724 in the main display region 232. According to another embodiment, when the user selects the icon 724, the display device 200 may download the image file corresponding to the icon 724.

FIG. 7B is a diagram illustrating an example of a method of adding an object displayed in the main display region 232 to the sub-display region 234. According to an embodiment, the user may select an image 712 included in the main display region. For example, the user may long-touch the image 712.

The user may drag the image 712 from the main display region 232 to the sub-display region 234. The sub-display region 234 may display an icon 726 representing shortcut information of the image 712.

According to an embodiment, the shortcut information indicated by the icon 726 may be a network address accessible via the image 712. When the user selects the icon 726, the image file may be displayed in the main display region 232. According to another embodiment, when the user selects the icon 726, the image file corresponding to the icon 726 may be downloaded to the display device 200.

According to another embodiment, the display device 200 may download the image 712 according to a drag gesture of the user. In this case, the shortcut information indicated by the icon 726 may indicate a location of the image 712 stored in the display device 200.

The display device 200 may display the icon 726 at a location in the sub-display region 234 where the user ends the drag gesture. When another icon is already located at the location where the user ends the drag gesture, the display device 200 may slide or move the other icon up or down. According to another embodiment, the icon 726 may be displayed at the bottom of icons included in the sub-display region 234.

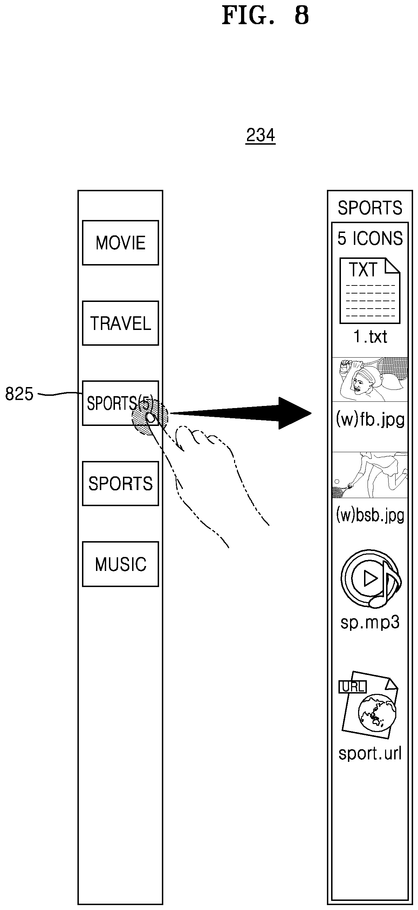

FIG. 8 is a diagram illustrating an example of a method of using a group icon. According to FIG. 8, the sub-display region 234 may include one or more group icons. Each group icon may indicate a group including one or more icons. One or more icons may form a group according to content, time, size, type, or an arbitrary standard set by a user.

Referring to FIG. 8, the sub-display region 234 may include a movie group, a travel group, sports group, a food group, and a music group. Each group may include one or more icons. According to an embodiment, there may be a group that does not include an icon. When the user selects a group, icons included in the group may be displayed in the sub-display region 234.

For example, the user may select a sports group 825. In this case, icons included in the sports group 825 may be displayed in the sub-display region 234. The icons may indicate shortcut information of a text file, an image file, music, and a webpage related to sports.

According to an embodiment, the user may input a leftward or rightward swipe gesture on the sub-display region 234. In this case, a group displayed in the sub-display region 234 may change.

For example, the sub-display region 234 is displaying the icons included in the sports group, and when the user inputs a leftward swipe gesture on the sub-display region 234, the sub-display region 234 may display icons included in the travel group. Also, when the user inputs a rightward swipe gesture on the sub-display region 234, the sub-display region 234 may display icons included in the food group.

The sub-display region 234 may display the number of icons in a group. According to an embodiment, a group icon may indicate the number of icons in a group. For example, when the sports group 825 includes 5 icons, a "(5)" may be added to a name of a group icon corresponding to the sports group 825.

According to another embodiment, the number of icons included in a group may be displayed together with the icons included in the group. For example, when the user selects the sports group 825, the sub-display region 234 may display the number of icons included in the sports group 825 together with the icons included in the sports group 825.

According to an embodiment, in order to add an icon to a group, the user may drag an icon to a point where the icon overlaps a group icon to which the user wishes to add the icon. Also, the user may drag an object included in the main display region 232 to a point where the object overlaps a group icon included in the sub-display region 234. According to another embodiment, the display device 200 may group icons included in the sub-display region 234 according to a predetermined standard.

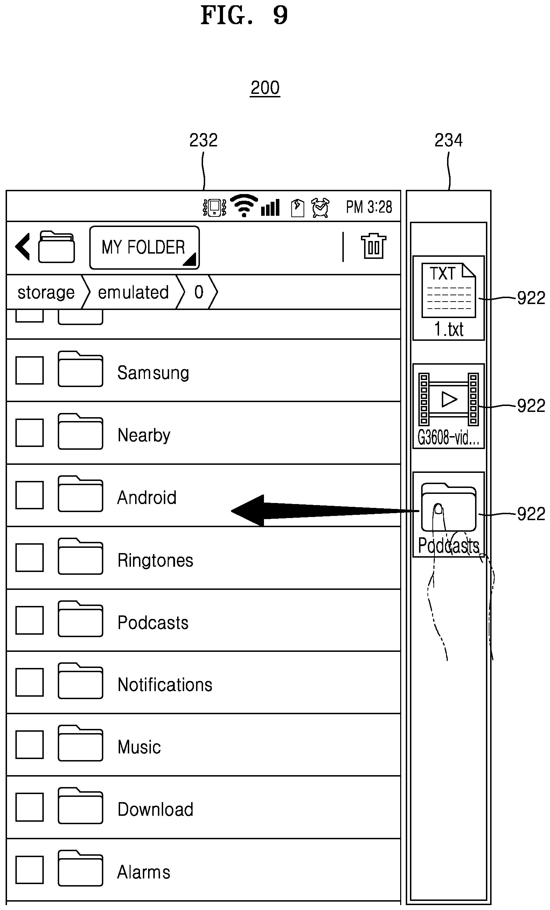

FIG. 9 is a diagram illustrating an example of a method of editing a sub-display region. Referring to FIG. 9, the display device 200 may include the main display region 232 and the sub-display region 234. According to an embodiment, the main display region 232 may display a file explorer application. The sub-display region 234 may display one or more icons.

According to an embodiment, the display device 200 may receive a selection input with respect to an icon 922 included in the sub-display region 234. For example, a user may perform a long-touch gesture on the icon 922. According to another embodiment, the user may set the sub-display region to a selection mode and then touch the icon 922.

The user may drag the selected icon 922 from the sub-display region 234 to an arbitrary location of the main display region 232. In this case, the icon 922 may be removed from the sub-display region 234.

According to an embodiment, the user may drag the icon 922 from the sub-display region 234 along an arbitrary path included in the main display region. For example, the user may drag the icon 922 to a region of "My Folder" displayed in the main display region 232 by a file explorer program. In this case, an object corresponding to the icon 922 may be copied or moved to a location in "My Folder".

According to another embodiment, the user may drag the icon 922 to the main display region such that the icon 922 overlaps an arbitrary folder object. For example, the user may drag the icon 922 to overlap an "Android" folder. In this case, the icon corresponding to the icon 922 may be copied or moved to the "Android" folder.

The user may drag the selected icon 922 to another location in the sub-display region 234. In this case, an order of icons included in the sub-display region 234 may be changed. When another icon is already located at the location where the user ends the drag gesture, the display device 200 may slide or move the other icon up or down.

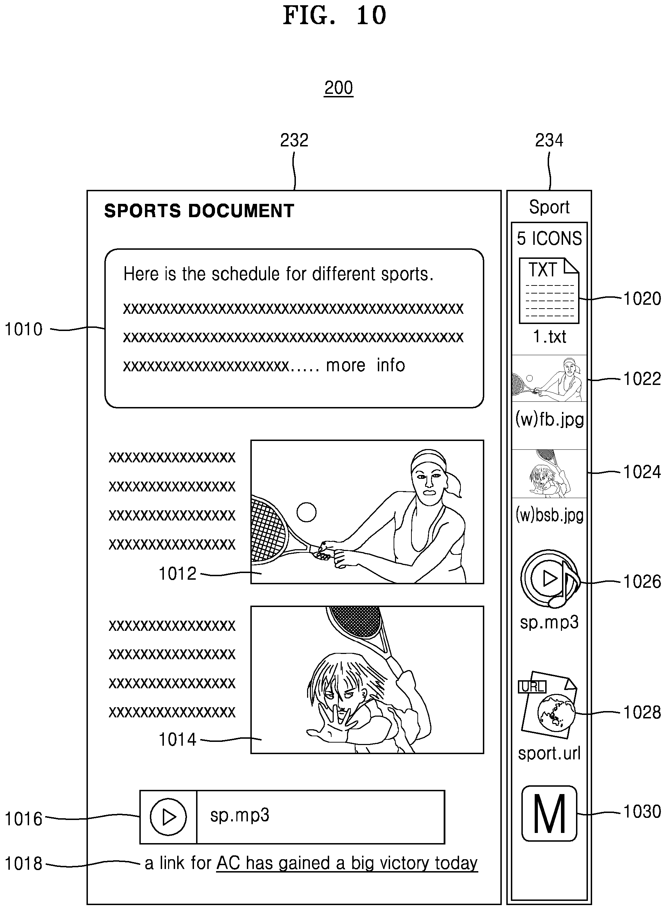

FIG. 10 is a diagram illustrating an example of a method of generating a document by using icons included in a sub-display region. Referring to FIG. 10, a document is displayed in the main display region 232. The sub-display region 234 includes 5 icons included in a 'Sports' group.

A user may execute a document preparing application. According to an embodiment, the user may have selected a document preparing option using the sub-display region 234. In this case, the title of a document may follow the name of a group displayed in the sub-display region. For example, the title of a current document may be 'sports document'.

The user may drag an icon included in the sub-display region 234 to a certain location of the main display region 232. In this case, content of an object corresponding to the icon may be included in a corresponding location of a document. For example, when the user drags an icon corresponding to an image file over to a document, an image of the image file may be inserted to the center of the document.

Referring to FIG. 10, 5 icons are included in the sub-display region 234. A document completed by using the 5 icons is displayed in the main display region 232.

Text box 1010 indicates content of a text file corresponding to an icon 1020 displayed in the sub-display region 234. According to an embodiment, when the amount of space in the text box 1010 is too small to display all of the text included in the text file, the display device 200 may insert some of the text along with a link for reading the entirety of the text file.

An image 1012 and an image 1014 respectively indicate content of image files corresponding to icon 1022 and an icon 1024. According to an embodiment, each of the image files may be inserted into the document according to a pre-set image size. According to another embodiment, the user may set the size of each of the image files when inserting the image files into the document.

Audio 1016 indicates an audio file corresponding to an icon 1026. According to an embodiment, an audio player image may be inserted to the document. When the user selects the audio player image, audio may be replayed. According to another embodiment, a link to an audio player may be inserted into the document. When the user selects the link, the audio player may be executed.

A link 1018 indicates a network address of a webpage corresponding to an icon 1028. According to an embodiment, when the user drags the icon 1028 corresponding to the webpage to the document, a link of the webpage may be inserted to the document. When the user selects the link, the webpage may be accessed.

According to another embodiment, content of the webpage may be inserted to the document. The entire content of the webpage may be inserted to the document. Also, an abstract of the content of the webpage and the link of the webpage may be inserted to the document.

According to an embodiment as defined by the claims, the sub-display region 234 includes a merge button 1030. When the user selects the merge button 1030, the display device 200 generates the document by suitably combining objects corresponding to the icons included in the sub-display region 234. The display device 200 displays the generated document in the main display region 232.

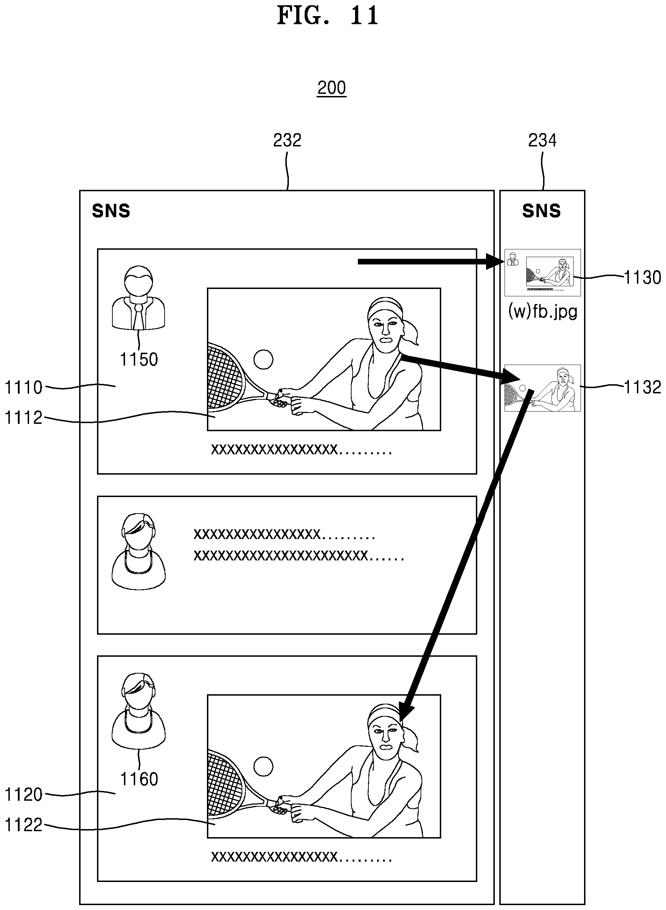

FIG. 11 is a diagram illustrating an example of a method of updating a social network service (SNS) profile or status by using a sub-display region. According to an embodiment, an SNS screen may be displayed in the main display region 232. A user 1160 may check posts made by himself/herself and by another user 1150.

According to an embodiment, the user 1160 may select a posting 1110 posted by the other user 1150. The user 1160 may drag the selected posting 1110 from the main display region 232 to the sub-display region 234. The display device 200 may generate an icon 1130 representing content or a network address of the posting 1110. The display device 200 may display the icon 1130 in the sub-display region 234.

Also, the user 1160 may select an image 1112 included in the posting 1110 posted by the other user 1150. The user 1160 may drag the selected image 1112 from the main display region 232 to the sub-display region 234. The display device 200 may generate an icon 1132 representing content or a network address of the image 1112. The display device 200 may display the icon 1132 in the sub-display region 234.

The user 1160 may drag the icon 1132 from the sub-display region 234 to the main display region 232. The display device 200 may generate and upload an SNS posting 1120 including an image 1122 corresponding to the icon 1132.

Also, the user 1160 may drag the icon 1130 from the sub-display region 234 to the main display region 232. The display device 200 may upload the SNS posting 1120 corresponding to the icon 1130 to an account of the user 1160. Accordingly, the user 1160 may easily share the posting 1110 with the other user 1150 by using the sub-display region 234.

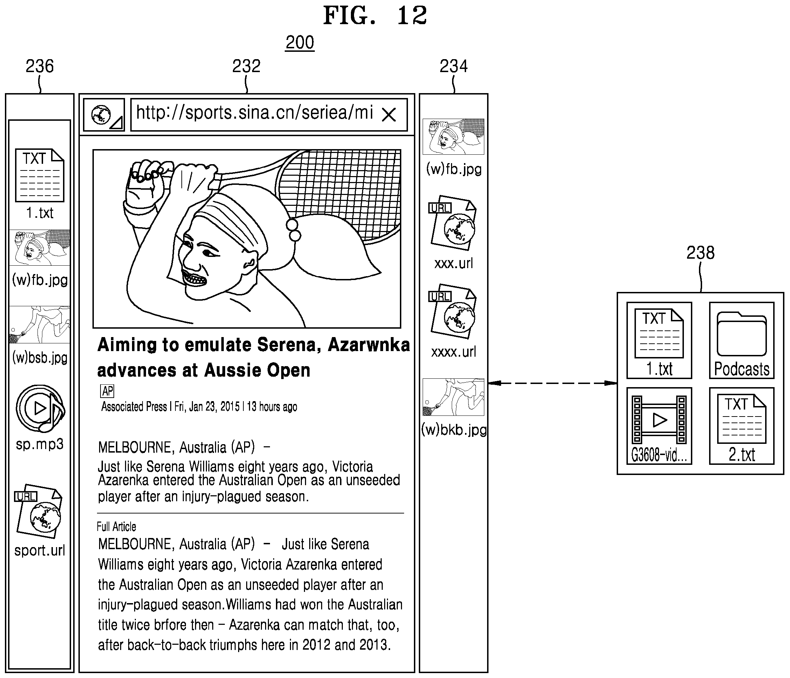

FIG. 12 is a diagram illustrating an example of a display device including a plurality of sub-display regions. The display device 200 may include one or more sub-display regions. Referring to FIG. 12, the display device 200 may include a first sub-display region 234 and a second sub-display region 236.

Also, the display device 200 may use a third sub-display region 238 included in an external device. According to an embodiment, the external device including the third sub-display region 238 may be a wearable device, such as a smart watch, but is not limited thereto.

According to an embodiment, the first through third sub-display regions 234 through 238 may share data. For example, the user may have added an icon by dragging an object to the first sub-display region 234. The user may display the same icon in the second and third sub-display regions 236 and 238 without having to drag the object again.

According to another embodiment, the first through third sub-display regions 234 through 238 may not share data. For example, an icon corresponding to an object dragged by the user to the sub-display region 234 may only be displayed in the sub-display region 234.

When a sub-display region is separate from the main display region 232, like the third sub-display region 238, the user may add an icon to the third sub-display region 238 by selecting a separate menu. For example, the user may select an object included in the main display region 232, and then select a menu (not shown), such as 'Create Shortcut'.

According to another embodiment, an icon corresponding to an object dragged to a point exceeding a display region of the display device 200 may be displayed in the third sub-display region 238. For example, the speed of a drag gesture input by the user may be out of a recognition range of the touch panel included in the display device 200 faster than the predetermined speed. In this case, the display device 200 may determine that the drag gesture input by the user is a drag gesture corresponding to the third sub-display region 238.

According to an embodiment, each sub-display region may display, in addition to an icon, information such as a time, a message, a schedule, weather, and news. Each of a plurality of sub-display regions may display different pieces of information. Also, a user may change information displayed in a sub-display region by using a swipe motion with respect to each sub-display region.

An embodiment may also be realized in a form of a computer-readable recording medium, such as a program module executed by a computer. A computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable commands, data structures, program modules, and other data. The communication medium typically include a computer-readable command, a data structure, a program module, other data of a modulated data signal, or another transmission mechanism, and an example thereof includes an arbitrary information transmission medium. For example, the computer storage medium configured as ROM, RAM, a flash memory, CD, DVD, a magnetic disk or a magnetic tape.

According to an embodiment, a program for executing a method of controlling the display device 200, the method including: receiving a selection input of a user with respect to an object included in the main display region 232; receiving a motion input of the user moving the object to the sub-display region 234, obtaining shortcut information of the object; and displaying an icon representing the shortcut information in the sub-display region, may be recorded.

## Claims

1. A method of controlling a display device (200), the method comprising:
receiving a first selection input of a user selecting an object included in a main display region (232);
receiving a motion input of the user moving the object to a sub-display region (234);
displaying icons in the sub-display region (234),
wherein an icon included among the displayed icons indicates a shortcut information of the object;
receiving a second selection input of the user selecting a merge button (1030);
generating a document including at least a portion of each of a plurality of objects corresponding to each of the displayed icons in the sub-display region (234) in response to the second selection input of the user; and
displaying the document in the main display region (232).

2. The method of claim 1, wherein the sub-display region (234) extends from or is separate from the main display region (232).

3. The method of claim 1, wherein the object is one of an application, a contacts list, a folder, a text file, an image file, an audio file, and a video file which are included in the display device (200), and
the shortcut information indicates a location where the object is stored.

4. The method of claim 1, wherein the object is one of a webpage, text, an image, and video data received by the display device from an external source, and
the receiving of the motion input comprises downloading the object to the display device (200).

5. The method of claim 1, wherein the object is one of a webpage, text, an image, and video data received by the display device (200) from an external source, and
the shortcut information includes a network address of the object.

6. The method of claim 5, further comprising:
receiving a third selection input of the user selecting the icon; and
downloading the object to the display device (200).

7. The method of claim 1, wherein the displaying comprises:
generating a group comprising at least one of the icons; and
displaying a group icon corresponding to the group in the sub-display region (234).

8. The method of claim 1, wherein the motion input of the user with respect to the sub-display region (234) comprises at least one of a drag gesture, a touch gesture, a double touch gesture, a multi-touch gesture, a long-touch gesture, and a slide gesture, and
the determining of the response comprises editing the sub-display region (234).

9. A display device (200) comprising:
a display (230) including a main display region (232) and at least one sub-display region (234);
a user input interface (220) configured to receive a first selection input of a user selecting an object included in the main display region (232), and receive a motion input of the user moving the object to the at least one sub-display region (234); and
a controller (210) configured to:
generate an icon representing shortcut information of the object;
control the display to display the icon in the at least one sub-display region (234);
control the user input interface to receive a second selection input of the user selecting a merge button (1030);
generate a document including at least a portion of each of a plurality of objects corresponding to each of the displayed icons in the at least one sub-display region (234) in response to the second selection input of the user; and
control the display to display the document in the main display region (232).

10. The display device (200) of claim 9, further comprising a storage unit (250), wherein the object is one of an application, a contacts list, a folder, a text file, an image file, an audio file, and a video file, which are stored in the storage unit (250), and
the shortcut information indicates a location where the object is stored.

11. The display device of claim 9, further comprising a communicator (240) configured to receive external data comprising at least one of a webpage, text, an image, and video data, and
the object is included in the external data.

12. The display device (200) of claim 11, wherein the user input interface (220) is configured to receive a third selection input of the user selecting the icon, and
the communicator (240) is further configured to download the object to the display device (200).

13. The display device (200) of claim 10, wherein the shortcut information includes a network address of the object.

14. The display device (200) of claim 9, wherein the controller is further configured to generate a group comprising at least one of the icons; and control the display to display a group icon corresponding to the group in the sub-display region (234).

## Patentansprüche

1. Verfahren zum Steuern einer Anzeigevorrichtung (200), wobei das Verfahren umfasst: Empfangen einer ersten Auswahleingabe eines Benutzers, der ein Objekt auswählt, das in einem Hauptanzeigebereich (232) enthalten ist;
Empfangen einer Bewegungseingabe des Benutzers, der das Objekt zu einem Unteranzeigebereich (234) bewegt;
Anzeigen von Symbolen im Unteranzeigebereich (234),
wobei ein unter den angezeigten Symbolen enthaltenes Symbol eine Verknüpfungsinformation des Objekts anzeigt;
Empfangen einer zweiten Auswahleingabe des Benutzers, der eine Zusammenführungsschaltfläche (1030) auswählt; Generieren eines Dokuments, das mindestens einen Teil von jedem einer Vielzahl von Obj ekten enthält, die jedem der angezeigten Symbole im Unteranzeigebereich (234) entsprechen, als Reaktion auf die zweite Auswahleingabe des Benutzers; und
Anzeigen des Dokuments im Hauptanzeigebereich (232).

2. Verfahren nach Anspruch 1, wobei sich der Unteranzeigebereich (234) von dem Hauptanzeigebereich (232) erstreckt oder von diesem getrennt ist.

3. Verfahren nach Anspruch 1, wobei das Objekt eines von einer Anwendung, einer Kontaktliste, einem Ordner, einer Textdatei, einer Bilddatei, einer Audiodatei oder einer Videodatei ist, die in der Anzeigevorrichtung (200) enthalten sind, und
die Verknüpfungsinformationen einen Ort angeben, an dem das Objekt gespeichert ist.

4. Verfahren nach Anspruch 1, wobei das Objekt eines von einer Webseite, Text, einem Bild oder Videodaten ist, die von der Anzeigevorrichtung von einer externen Quelle empfangen werden, und
das Empfangen der Bewegungseingabe das Herunterladen des Objekts auf die Anzeigevorrichtung (200) umfasst.

5. Verfahren nach Anspruch 1, wobei das Objekt eines von einer Webseite, Text, einem Bild oder Videodaten ist, die von der Anzeigevorrichtung (200) von einer externen Quelle empfangen werden, und
die Verknüpfungsinformationen eine Netzwerkadresse des Objekts enthalten.

6. Verfahren nach Anspruch 5, ferner umfassend:
Empfangen einer dritten Auswahleingabe des Benutzers, der das Symbol auswählt; und Herunterladen des Objekts auf die Anzeigevorrichtung (200).

7. Verfahren nach Anspruch 1, wobei das Anzeigen umfasst:
Generieren einer Gruppe, die mindestens eines der Symbole umfasst; und
Anzeigen eines Gruppensymbols, das der Gruppe entspricht, im Unteranzeigebereich (234).

8. Verfahren nach Anspruch 1, wobei die Bewegungseingabe des Benutzers in Bezug auf den Unteranzeigebereich (234) mindestens eine von einer Ziehgeste, einer Berührungsgeste, einer Doppelberührungsgeste, einer Mehrfachberührungsgeste, einer Langberührungsgeste und einer Gleitgeste umfasst und
das Ermitteln der Reaktion das Bearbeiten des Unteranzeigebereichs (234) umfasst.

9. Anzeigevorrichtung (200), umfassend:
eine Anzeige (230), die einen Hauptanzeigebereich (232) und mindestens einen Unteranzeigebereich (234) enthält;
eine Benutzereingabeschnittstelle (220), die konfiguriert ist, um eine erste Auswahleingabe eines Benutzers zu empfangen, der ein in dem Hauptanzeigebereich (232) enthaltenes Objekt auswählt, und eine Bewegungseingabe des Benutzers zu empfangen, der das Objekt zu dem mindestens einen Unteranzeigebereich (234) bewegt; und
eine Steuerung (210), die konfiguriert ist, um:
ein Symbol zu generieren, das Verknüpfungsinformationen des Objekts darstellt;
die Anzeige zu steuern, um das Symbol in dem mindestens einen Unteranzeigebereich (234) anzuzeigen;
die Benutzereingabeschnittstelle zu steuern, um eine zweite Auswahleingabe des Benutzers zu empfangen, der eine Zusammenführungsschaltfläche (1030) auswählt;
ein Dokument zu generieren, das mindestens einen Teil von jedem einer Vielzahl von Objekten enthält, die jedem der angezeigten Symbole in dem mindestens einem Unteranzeigebereich (234) entsprechen, als Reaktion auf die zweite Auswahleingabe des Benutzers; und
die Anzeige zu steuern, um das Dokument im Hauptanzeigebereich (232) anzuzeigen.

10. Anzeigevorrichtung (200) nach Anspruch 9, ferner umfassend eine Speichereinheit (250), wobei das Objekt eines von einer Anwendung, einer Kontaktliste, einem Ordner, einer Textdatei, einer Bilddatei, einer Audiodatei und einer Videodatei ist, die in der Speichereinheit (250) gespeichert sind, und die Verknüpfungsinformationen einen Ort angeben, an dem das Objekt gespeichert ist.

11. Anzeigevorrichtung nach Anspruch 9, ferner umfassend einen Kommunikator (240), der konfiguriert ist, um externe Daten zu empfangen, die mindestens eines von einer Webseite, Text, einem Bild und Videodaten umfassen, und
wobei das Objekt in den externen Daten enthalten ist.

12. Anzeigevorrichtung (200) nach Anspruch 11, wobei die Benutzereingabeschnittstelle (220) konfiguriert ist, um eine dritte Auswahleingabe des Benutzers zu empfangen, der das Symbol auswählt, und
der Kommunikator (240) ferner konfiguriert ist, um das Objekt auf die Anzeigevorrichtung (200) herunterzuladen.

13. Anzeigevorrichtung (200) nach Anspruch 10, wobei die Verknüpfungsinformationen eine Netzwerkadresse des Objekts enthalten.

14. Anzeigevorrichtung (200) nach Anspruch 9, wobei die Steuerung ferner konfiguriert ist, um eine Gruppe zu generieren, die mindestens eines der Symbole umfasst; und die Anzeige zu steuern, um ein Gruppensymbol, das der Gruppe entspricht, in dem Unteranzeigebereich (234) anzuzeigen.

## Revendications

1. Procédé de commande d'un dispositif d'affichage (200), le procédé comprenant :
la réception d'une première entrée de choix d'un utilisateur choisissant un objet compris dans une zone d'affichage principale (232) ;
la réception d'une entrée de déplacement de l'utilisateur déplaçant l'objet vers une zone d'affichage secondaire (234) ;
l'affichage des icônes dans la zone d'affichage secondaire (234),
une icône comprise parmi les icônes affichées indiquant des informations de raccourci de l'objet ;
la réception d'une seconde entrée de choix de l'utilisateur choisissant un bouton de fusion (1030) ; la génération d'un document comprenant au moins une partie de chacun d'une pluralité d'objets correspondant à chacune des icônes affichées dans la zone d'affichage secondaire (234) en réponse à la seconde entrée de choix de l'utilisateur ; et
l'affichage du document dans la zone d'affichage principale (232).

2. Procédé selon la revendication 1, ladite zone d'affichage secondaire (234) s'étendant à partir de la zone d'affichage principale (232) ou étant séparée de celle-ci.

3. Procédé selon la revendication 1, ledit objet étant l'un d'une application, d'une liste de contacts, d'un dossier, d'un fichier texte, d'un fichier image, d'un fichier audio et d'un fichier vidéo qui sont compris dans le dispositif d'affichage (200), et
lesdites informations de raccourci indiquant un emplacement où l'objet est stocké.

4. Procédé selon la revendication 1, ledit objet étant l'un d'une page Web, d'un texte, d'une image et de données vidéo reçu(es) par le dispositif d'affichage en provenance d'une source externe, et ladite réception de l'entrée de déplacement comprenant le téléchargement de l'objet sur le dispositif d'affichage (200).

5. Procédé selon la revendication 1, ledit objet étant l'un d'une page web, d'un texte, d'une image et de données vidéo reçu(es) par le dispositif d'affichage (200) en provenance d'une source externe, et lesdites informations de raccourci comprenant une adresse réseau de l'objet.

6. Procédé selon la revendication 5, comprenant en outre :
la réception d'une troisième entrée de choix de l'utilisateur sélectionnant l'icône ; et le téléchargement de l'objet sur le dispositif d'affichage (200).

7. Procédé selon la revendication 1, ledit affichage comprenant : la génération d'un groupe comprenant au moins l'une des icônes ; et
l'affichage d'une icône de groupe correspondant au groupe dans la zone d'affichage secondaire (234).

8. Procédé selon la revendication 1, ladite entrée de déplacement de l'utilisateur par rapport à la zone d'affichage secondaire (234) comprenant au moins l'un d'un geste de traînée, d'un geste de toucher, d'un geste de toucher double, d'un geste multitoucher, d'un geste de toucher long et d'un geste de glissement, et
ladite détermination de la réponse comprenant l'édition de la zone d'affichage secondaire (234).

9. Dispositif d'affichage (200), comprenant :
un élément affichage (230) comprenant une zone d'affichage principale (232) et au moins une zone d'affichage secondaire (234) ;
une interface d'entrée utilisateur (220) configurée pour recevoir une première entrée de choix d'un utilisateur choisissant un objet compris dans la zone d'affichage principale (232), et recevoir une entrée de déplacement de l'utilisateur déplaçant l'objet vers l'au moins une zone d'affichage secondaire (234) ; et
un dispositif de commande (210) configuré pour :
générer une icône représentant des informations de raccourci de l'objet ;
commander à l'élément affichage d'afficher l'icône dans l'au moins une zone d'affichage secondaire (234) ;
commander à l'interface d'entrée utilisateur de recevoir une seconde entrée de choix de l'utilisateur choisissant un bouton de fusion (1030) ;
générer un document comprenant au moins une partie de chacun d'une pluralité d'objets correspondant à chacune des icônes affichées dans l'au moins une zone d'affichage secondaire (234) en réponse à la seconde entrée de choix de l'utilisateur ; et
commander à l'élément affichage d'afficher le document dans la zone d'affichage principale (232).

10. Dispositif d'affichage (200) selon la revendication 9, comprenant en outre une unité de stockage (250), ledit objet étant l'un d'une application, d'une liste de contacts, d'un dossier, d'un fichier texte, d'un fichier image, d'un fichier audio et d'un fichier vidéo, qui sont stockés dans l'unité de stockage (250), et lesdites informations de raccourci indiquant un emplacement où l'objet est stocké.

11. Dispositif d'affichage selon la revendication 9, comprenant en outre un communicateur (240) configuré pour recevoir des données externes comprenant au moins l'un d'une page web, d'un texte, d'une image et de données vidéo, et ledit objet étant compris dans les données externes.

12. Dispositif d'affichage (200) selon la revendication 11, ladite interface d'entrée utilisateur (220) étant configurée pour recevoir une troisième entrée de choix de l'utilisateur choisissant l'icône, et
ledit communicateur (240) étant en outre configuré pour télécharger l'objet sur le dispositif d'affichage (200).

13. Dispositif d'affichage (200) selon la revendication 10, lesdites informations de raccourci comprenant une adresse réseau de l'objet.

14. Dispositif d'affichage (200) selon la revendication 9, ledit dispositif de commande étant en outre configuré pour générer un groupe comprenant au moins l'une des icônes ; et commander à l'élément affichage d'afficher une icône de groupe correspondant au groupe dans la zone d'affichage secondaire (234).
